# EUROPEAN PATENT SPECIFICATION

(11) **EP 2 832 107 B1**
(45) Date of publication and mention of the grant of the patent: **04.03.2020**
(21) Application number: 13717070.0
(22) Date of filing: 22.03.2013
(51) Int. Cl.: H04N 21/422, H04M 1/725, H04N 21/4223, H04N 21/43, H04N 21/41

(54) **INFORMATION PROCESSING APPARATUS, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT DE DONNÉES, PROCÉDÉ DE TRAITEMENT DE DONNÉES, ET PROGRAMME

(30) Priority: 26.03.2012 JP 2012069501
(43) Date of publication of application: 04.02.2015
(73) Proprietor: Sony Corporation, Tokyo 108-0075 (JP)
(72) Inventor: KASAHARA, Shunichi, Tokyo 108-0075 (JP)
(74) Representative: MFG Patentanwälte Meyer-Wildhagen Meggle-Freund Gerhard PartG mbB
(86) International application number: PCT/JP2013/001963
(87) International publication number: WO 2013/145673

(56) References cited:
- EP-A1- 2 359 915
- EP-A2- 2 613 555
- WO-A1-2009/144536
- US-A1- 2011 037 851
- US-A1- 2011 138 416
- US-A1- 2011 225 330
- US-A1- 2012 017 236
- US-A1- 2012 068 857
- US-A1- 2012 117 600
- US-A1- 2012 147 022
- US-B1- 8 160 564

## Description

### Technical Field

The present disclosure relates to an information processing apparatus, an information processing method, and a program.

The present application claims priority from Japanese Patent Application No. 2012-069501 filed March 26, 2012.

### Background Art

In recent years, due to the progress in image recognition technology, it has become possible to recognize various objects included in images produced by image pickup of a real space, for example, as well as the positions and postures of such objects. Such object recognition technologies are used for example in a technology called AR (Augmented Reality) which presents the user with additional information by overlaying information onto images of a real space. As one example of AR technology, JP 2003-256876A discloses a technique displaying an image of a virtual object produced by modeling a real object, such as a piece of furniture, overlaid on an image of a real space to make it easier for the user to try different arrangements of furniture or the like.

US2011/0037851 discloses a remote control device including a camera capturing an image of a target device; a short range communication module transmitting a control command to the target device and communicating with the target device; a display unit displaying the captured actual image of the target device or a virtual image related to the target device and a control unit generating a control signal for control of the target device.

### Citation List

### Patent Literature

PTL 1: JP 2003-256876A

### Summary

### Technical Problem

By using the AR technology described above, it is also possible to operate an image on another apparatus included in an image produced by image pickup of a real space. However, a technology for improving operability in such a situation has yet to be proposed.

For this reason, the present disclosure aims to provide a novel and improved information processing apparatus, information processing method, and program capable of improving operability when operating an image on another apparatus displayed in an image.

### Solution to Problem

The present invention relates to an information processing apparatus according to claim 1, a method for processing an image according to claim 13 and a program according to claim 14.

### Advantageous Effects of Invention

According to the above embodiments of the present disclosure, it is possible to improve operability when operating an image on another apparatus displayed within an image.

### Brief Description of Drawings

[fig. 1] Fig. 1 is a diagram useful in explaining an overview of a first embodiment of the present disclosure.
[fig.2]Fig. 2 is a simplified block diagram showing the functional configuration of a terminal apparatus according to the first embodiment of the present disclosure.
[fig.3A]Fig. 3A is a diagram useful in explaining an example of a switching process according to the first embodiment of the present disclosure.
[fig.3B]Fig. 3B is a diagram useful in explaining an example of the switching process according to the first embodiment of the present disclosure.
[fig.4]Fig. 4 is a flowchart showing the processing for the example in Figs. 3A and 3B.
[fig.5A]Fig. 5A is a diagram useful in explaining an example of a switching process according to the second embodiment of the present disclosure.
[fig.5B]Fig. 5B is a diagram useful in explaining an example of the switching process according to the second embodiment of the present disclosure.
[fig.5C]Fig. 5C is a diagram useful in explaining an example of a switching process according to the second embodiment of the present disclosure.
[fig.6]Fig. 6 is a flowchart showing the processing for the example in Figs. 5A to 5C.
[fig.7A]Fig. 7A is a diagram useful in explaining an example of a switching process according to the third embodiment of the present disclosure.
[fig.7B]Fig. 7B is a diagram useful in explaining an example of the switching process according to the third embodiment of the present disclosure.
[fig.7C]Fig. 7C is a diagram useful in explaining an example of the switching process according to the third embodiment of the present disclosure.
[fig.8]Fig. 8 is a flowchart showing the processing for the example in Figs. 7A to 7C.
[fig.9]Fig. 9 is a block diagram useful in explaining the hardware configuration of an information processing apparatus.

### Description of Embodiments

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

The following description is given in the order indicated below.
1. First Embodiment
1-1. Overview
1-2. Apparatus Configuration
1-3. Example of Switching Process
2. Second Embodiment
3. Third Embodiment
4. Other Embodiments
5. Supplement

### 1. First Embodiment

### 1-1. Overview

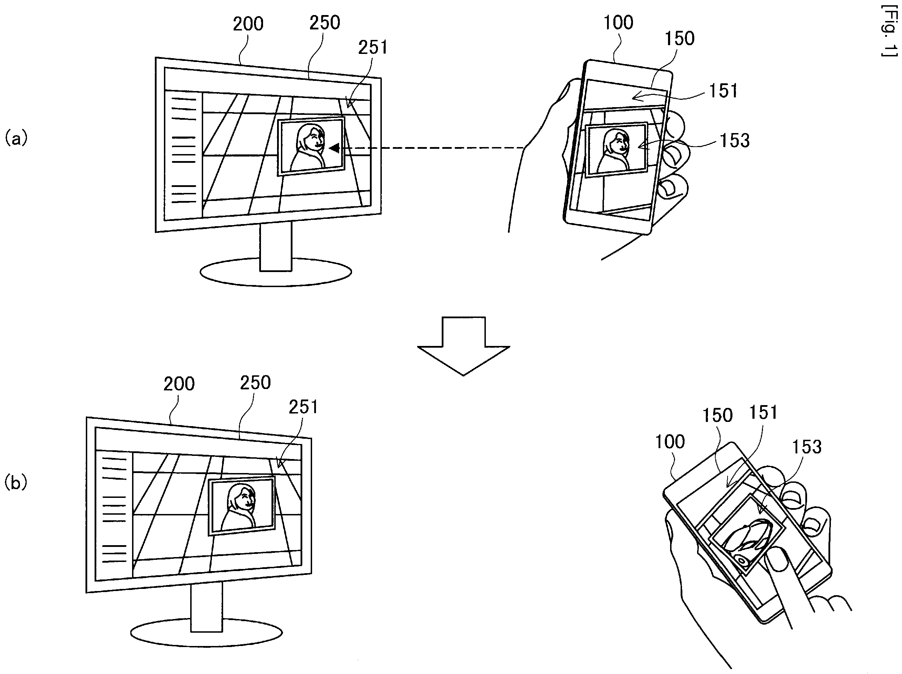

First, an overview of a first embodiment of the present disclosure will be described with reference to Fig. 1. Note that this overview also applies to the other embodiments of the present disclosure described later.

Fig. 1 is a diagram useful in explaining an overview of the present embodiment. As shown in Fig. 1, the present embodiment relates to a terminal apparatus 100 (one example of an "information processing apparatus") and a display apparatus 200. The terminal apparatus 100 acquires a picked-up image of a real space including the display apparatus 200 and, based on the picked-up image, displays an image 151 on a display unit 150. As described later, the terminal apparatus 100 includes a function for recognizing objects included in a picked-up image, and is capable of using the result of object recognition for the picked-up image when displaying the image 151.

Meanwhile, the display apparatus 200 includes a display screen 250 and has an image 251 (one example of a "first image") displayed on the display screen 250. Since the display apparatus 200 is included in the picked-up image acquired by the terminal apparatus 100, the image 251 displayed on the display screen 250 is also included in the picked-up image. The terminal apparatus 100 recognizes the display screen 250 and the image 251 from the picked-up image and displays a virtual image 153 (one example of a "second image") corresponding to the image 251 in the image 151. Note that the virtual image 153 may be produced by drawing the image 251 included in the picked-up image in its picked-up state or may be redrawn using the result of object recognition on the picked-up image.

The terminal apparatus 100 is an apparatus that is usually operated while being held by the user, such as a mobile phone (or smartphone), a tablet PC (personal computer), a mobile game console, or a media player. The display apparatus 200 is an apparatus that is mainly used in a placed state without being held, such as a television set, a desktop or notebook PC, or a PC monitor. However, the embodiments of the present disclosure are not limited to such examples. As an alternative example, both the terminal apparatus 100 and the display apparatus 200 may be smartphones.

As described above, the terminal apparatus 100 has a function for recognizing objects included in a picked-up image. In the illustrated example, the terminal apparatus 100 recognizes the display screen 250 and the image 251 included in the picked-up image. This means that the terminal apparatus 100 is capable of acquiring an operation of the virtual image 153 in the image 151 and changing the virtual image 153 in the same way as when the same operation is carried out on the actual image 251, for example.

For example, by converting coordinates on the display unit 150 to coordinates on the display screen 250, the terminal apparatus 100 is capable of assigning the same functions as GUI (Graphical User Interface) components (such as buttons, links, and scroll bars) in the image 251 to GUI components included in the virtual image 153. In this case, if the user carries out an operation, such as pressing, tapping, dragging or flicking a GUI component included in the virtual image 153, via a touch panel provided on the display unit 150, the virtual image 153 will change in the same way as when the same operation is carried out on a GUI component in the image 251.

When changing the virtual image 153 in this way, the terminal apparatus 100 may have the present image 251 synchronized with the virtual image 153, or may not do so. That is, the operation modes of the terminal apparatus 100 may include a synchronous mode where the image 251 is synchronized with the virtual image 153 and an asynchronous mode where the image 251 is not synchronized with the virtual image 153. Note that in the present specification, the expression "synchronizing images" refers to having a plurality of images drawn so that there is correspondence between the images. As one example, if the image 251 and the virtual image 153 are synchronized, a change in the image 251 may be reflected in a change in the virtual image 153. In the same way, a change in the virtual image 153 may be reflected in the image 251.

Next, an example of synchronous mode will be described with reference to (a) in Fig. 1 and an example of asynchronous mode will be described with reference to (b) in Fig. 1.

In (a) showing an example of synchronous mode, picked-up images are displayed as real-time video images on the display unit 150 of the terminal apparatus 100. As one example, if a user operation of a GUI component of the virtual image 153 has been acquired by the terminal apparatus 100, the terminal apparatus 100 changes the virtual image 153 in accordance with the operation, converts the information about the operation to information about an operation of a GUI component in the image 251, and transmits the converted information to the display apparatus 200. The display apparatus 200 then changes the image 251 based on the received information. Alternatively, the terminal apparatus 100 may transmit information of an image that has been changed in accordance with the operation to the display apparatus 200.

Meanwhile, if a user operation of a GUI component of the image 251 has been acquired at the display apparatus 200, the display apparatus 200 changes the image 251 in accordance with the operation. Here, as one example, the terminal apparatus 100 may recognize the change in the image 251 in the picked-up image and change the virtual image 153 in the same way as the image 251. Alternatively, the display apparatus 200 may transmit information on the operation to the terminal apparatus 100 and the terminal apparatus 100 may change the virtual image 153 based on the received information.

In (b) in Fig. 1 showing an example of asynchronous mode, a picked-up image at a given time is displayed as a snapshot (still image) on the display unit 150 of the terminal apparatus 100. Here, as one example, if a user operation of a GUI component of the virtual image 153 has been acquired at the terminal apparatus 100, the terminal apparatus 100 changes the virtual image 153 in accordance with the operation but does not transmit information to the display apparatus 200. As a result, the virtual image 153 changes independently of the present image 251.

Meanwhile, if a user operation of a GUI component of the image 251 has been acquired at the display apparatus 200, the display apparatus 200 changes the image 251 in accordance with the operation. Here, as one example, the terminal apparatus 100 may recognize the change in the image 251 in the picked-up image but does not reflect the recognition result in the virtual image 153. Alternatively, in asynchronous mode the terminal apparatus 100 may not carry out recognition for the image 251 in the picked-up image.

Note that a process that switches from synchronous mode to asynchronous mode is also referred to as "checking out". As one example, when synchronous mode has been set as shown in (a) described above, checking out occurs when the terminal apparatus 100 detects some type of trigger and switches to asynchronous mode as shown in (b). Due to checking out, it becomes possible for the virtual image 153 that was previously synchronized with the image 251 to freely change independently of the image 251.

Meanwhile, two types of processing, namely "checking in" and "discarding changes", are available as processes that switch from asynchronous mode to synchronous mode. As one example, when asynchronous mode has been set as shown in (b) described above, there is a switch to synchronous mode as shown in (a) when the terminal apparatus 100 detects some type of trigger. In asynchronous mode, since the virtual image 153 may change independently of the present image 251, in some cases the virtual image 153 and the image 251 will not correspond at the time of the switch. In such cases, a process that changes the image 251 to display the same image as the virtual image 153 is referred to as "checking in". Meanwhile, a process that changes the virtual image 153 to display the same image as the image 251 is referred to as "discarding changes".

Such switching between synchronous mode and asynchronous mode may occur many times during operation of the terminal apparatus 100, for example. For this reason, the switching between synchronous mode and asynchronous mode should preferably be realized by an easy and more intuitive operation. The first embodiment of the present disclosure described below includes a configuration that realizes such switching.

### 1-2. Apparatus Configuration

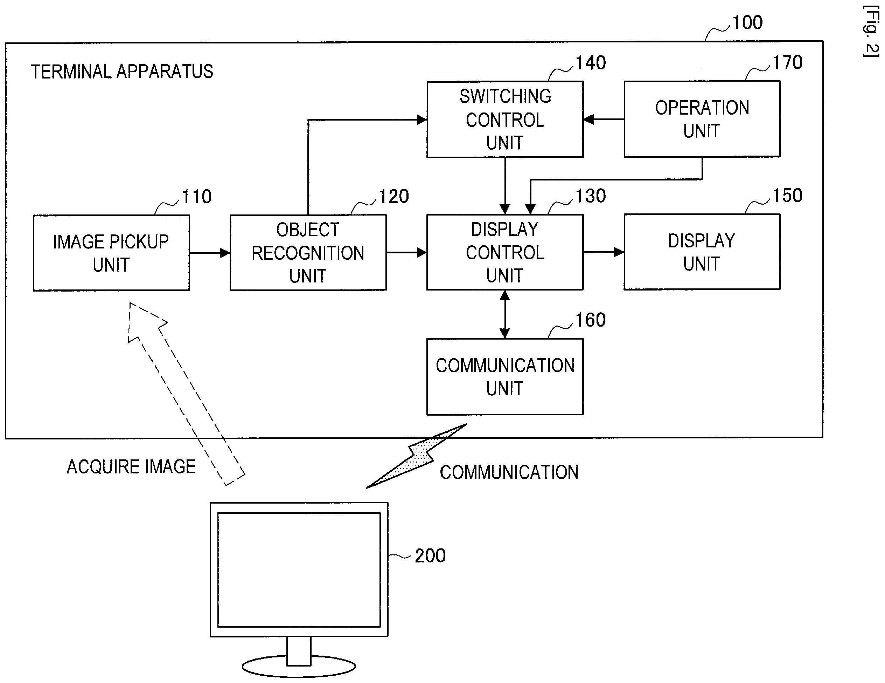

Next, the apparatus configuration of the first embodiment of the present disclosure will be described with reference to Fig. 2. Note that the apparatus configuration is the same in the other embodiments of the present disclosure.

Fig. 2 is a block diagram schematically showing the functional configuration of a terminal apparatus according to the present embodiment. As shown in Fig. 2, the terminal apparatus 100 includes an image pickup unit 110 (one example of a "picked-up image acquiring unit"), an object recognition unit 120, a display control unit 130, a switching control unit 140, a display unit 150, a communication unit 160, and an operation unit 170. Out of such components, the object recognition unit 120, the display control unit 130, and the switching control unit 140 are realized for example by a CPU (Central Processing Unit), a RAM (Random Access Memory), and a ROM (Read Only Memory) of the terminal apparatus 100 operating according to a program stored in a storage apparatus or a removable recording medium.

### Image Pickup Unit

The image pickup unit 110 is realized by an image pickup apparatus incorporated in or connected to the terminal apparatus 100, for example, and acquires picked-up images. The image pickup unit 110 may output the picked-up images as video images or may output the picked-up images as still images. As described earlier, the display screen 250 of the display apparatus 200 which displays the image 251 is included in such picked-up images. The image pickup unit 110 provides image data on the acquired picked-up images to the object recognition unit 120.

### Object Recognition Unit

The object recognition unit 120 recognizes objects included in the picked-up images using image data provided from the image pickup unit 110. As one example, the object recognition unit 120 matches a set of feature points extracted from a picked-up image against the form of objects defined by model data. The object recognition unit 120 may match image data such as a symbol mark or a text label defined by the model data against a picked-up image. Also, the object recognition unit 120 may match feature amounts of an image of an existing object defined by the model data against feature amounts extracted from a picked-up image.

Note that the model data includes data defining the forms of various objects, image data such as specified symbol marks or text labels attached to each object, and data of a feature amount set extracted from an existing image for each object. As one example, the model data is acquired from a model database stored in a storage apparatus. Alternatively, the model data may be acquired from a network via the communication unit 160.

Here, the object recognition unit 120 recognizes the display screen 250 included in a picked-up image and the image 251 displayed on the display screen 250. Recognition of the image 251 may be executed by searching the content of the image 251, for example. As one example, if the image 251 is a web page displayed on a browser, the object recognition unit 120 searches for the URL (Uniform Resource Locator) of the web page and a URI (Uniform Resource Identifier) showing an operation state of the web page. By acquiring HTML (Hyper Text Markup Language) information from a URL, it is possible to redraw the virtual image 153 in the image 151, for example.

Also, the object recognition unit 120 uses information such as the HTML described above to match regions in the image 151 with GUI components of the image 251 (that is, a markup process is carried out for the image 151). By doing so, it becomes possible to operate the virtual image 153 using GUI components in the same way as the image 251.

As another example, if the image 251 is an image of an operation screen of a television set or the like, as one example the terminal apparatus 100 may acquire information on the GUI components included in the operation screen from the display apparatus 200 and carry out the markup process for the image 151 in the same way as the example described above.

### Display Control Unit

The display control unit 130 displays the image 151 on the display unit 150 based on image data of the picked-up image acquired from the image pickup unit 110. As described earlier, the virtual image 153, which corresponds to the image 251 recognized from the picked-up image, is included in the image 151. The display control unit 130 may display the image 151 as an image where some type of additional information has been overlaid on the picked-up image. For example, the display control unit 130 may use the recognition result for the image 251 provided by the object recognition unit 120 to redraw the content of the image 251 and overlay the redrawn content on the picked-up image as the virtual image 153. Note that as described earlier, the display control unit 130 may change the virtual image 153 on display in accordance with a user operation of a GUI component in the virtual image 153 acquired by the operation unit 170, for example.

The display control unit 130 may also control the displaying of the image 251 on the display apparatus 200 via the communication unit 160. For example, if synchronous mode has been set, the display control unit 130 may reflect a change in the virtual image 153 due to a user operation in the image 251. In the same way, if synchronous mode has been set, the display control unit 130 may reflect a change in the image 251 in the virtual image 153 by redrawing the virtual image 153 corresponding to the change in the image 251.

In addition, the display control unit 130 may have various notifications relating to synchronous mode and asynchronous mode displayed on the display unit 150 or the display screen 250. For example, the display control unit 130 may have the display screen 250 display a display notifying that synchronous mode has been set. If a switch between synchronous mode and asynchronous mode has occurred due to processing by the switching control unit 140 described later, the display control unit 130 may have one or both of the display unit 150 and the display screen 250 display a warning showing that switching will occur or a display giving notification that switching has occurred.

### Switching Control Unit

The switching control unit 140 switches between synchronous mode where the image 251 is synchronized with the virtual image 153 and asynchronous mode where the image 251 is not synchronized with the virtual image 153. As one example, the switching control unit 140 switches between synchronous mode and asynchronous mode in accordance with the position or size of the display screen 250 (or the image 251) in a picked-up image that has been recognized by the object recognition unit 120. Alternatively, the switching control unit 140 may switch between the synchronous mode and the asynchronous mode if a specified user operation has been acquired by the operation unit 170.

### Display Unit

The display unit 150 is realized by an LCD (Liquid Crystal Display), an organic EL (Electro-Luminescence) display, or the like that for example the terminal apparatus 100 includes as an output apparatus or is connected to the terminal apparatus 100 as an externally connected appliance. The display unit 150 is not limited to a flat-panel display and may be an HMD (Head Mount Display), for example. The display unit 150 displays the image 151 in accordance with control by the display control unit 130.

### Communication Unit

The communication unit 160 is realized as an interface for a communication apparatus which is incorporated or connected to the terminal apparatus 100, for example. The communication unit 160 communicates with the display apparatus 200 via such communication apparatus. When synchronizing the image 251 to the virtual image 153, the communication unit 160 transmits information relating to a user operation for the virtual image 153 or the content of the virtual image 153 to the display apparatus 200. Also, the communication unit 160 may transmit, to the display apparatus 200, information for having a display notifying that synchronous mode has been set, a display warning that a switch between synchronous mode and asynchronous mode will occur, or a display notifying that a switch has occurred displayed in the image 251.

### Operation Unit

The operation unit 170 acquires a user operation and is realized by various types of input apparatus, such as a touch panel or a button or buttons, provided in the terminal apparatus 100 or connected to the terminal apparatus 100 as an externally connected appliance. The operation unit 170 acquires a user operation of a GUI component in the virtual image 153 displayed on the display unit 150, for example, and provides information on the user operation to the display control unit 130. The operation unit 170 may also be used to acquire a user operation for having the switching control unit 140 switch between the synchronous mode and the asynchronous mode.

### 1-3. Example of Switching Process

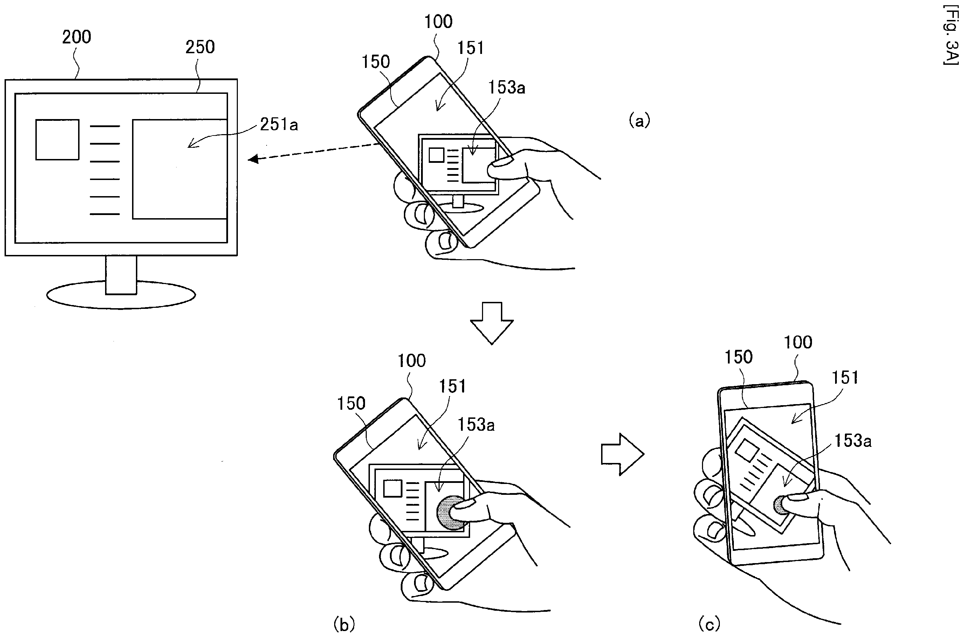

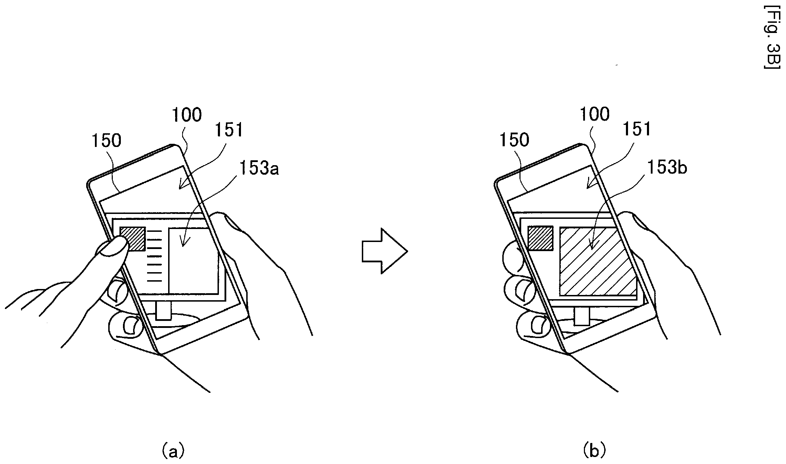

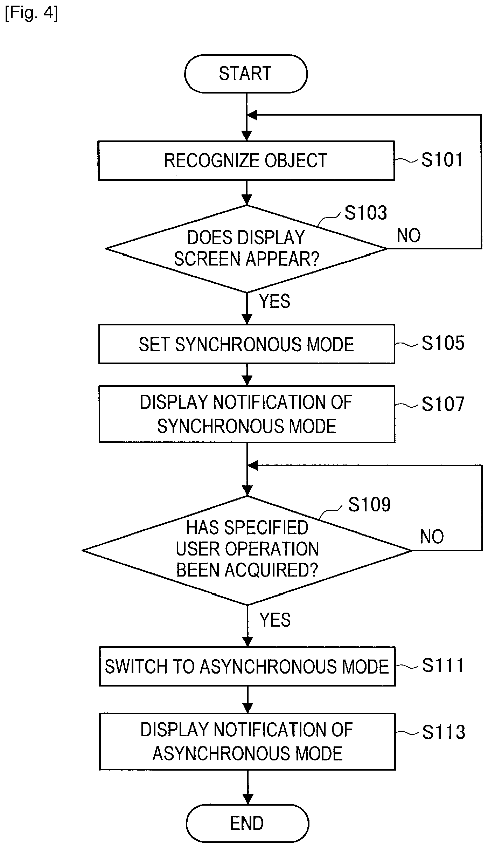

Next, an example of the switching process between synchronous mode and asynchronous mode according to the first embodiment of the present disclosure will be described with reference to Figs. 3A, 3B, and 4. Figs. 3A and 3B are diagrams useful in explaining an example of a switching process according to the present embodiment. Fig. 4 is a flowchart showing processing for the example in Figs. 3A and 3B.

In the example described below, the switching control unit 140 of the terminal apparatus 100 switches from synchronous mode to asynchronous mode in accordance with a user operation.

Fig. 3A shows stages from a state where synchronous mode is set up to a checking out of the virtual image 153 according to a user operation. (a) in Fig. 3A shows a state where synchronous mode is set, that is, the display of the present image 251 is synchronized to the display of the virtual image 153. In this state, as shown in (b), the user makes a long press on the display unit 150 (it is assumed here that the terminal apparatus 100 includes a touch panel as the operation unit 170).

In addition, as shown in (c), the user moves the terminal apparatus 100 while continuing the long press. Such movement of the terminal apparatus 100 can be detected by a sensor such as an acceleration sensor provided in the terminal apparatus 100, for example. At this time, the switching control unit 140 switches from synchronous mode to asynchronous mode. Meanwhile, the display control unit 130 converts the image 151 at the time in (b) to a snapshot. For this reason, at time (c), the image 151 will be in the same state as at time (b) regardless of any change in the picked-up images due to movement of the terminal apparatus 100.

Here, the display control unit 130 may have one or both of the display unit 150 and the display screen 250 display a display warning that a switch from synchronous mode to asynchronous mode will occur or a display notifying that switching has occurred.

As one example, when the user has made a long press on the display unit 150 at time (b), the display control unit 130 may have one or both of the display unit 150 and the display screen 250 display a message giving warning of switching. Also, when a switch to asynchronous mode has been carried out at time (c), the display control unit 130 may have one or both of the display unit 150 and the display screen 250 display a message giving notification that asynchronous mode has been set. Note that the displaying of messages will also be described later in the second embodiment.

Fig. 3B shows how the display of the virtual image 153 changes due to a user operation in asynchronous mode after checking out. (a) shows a state where a virtual image 153a, which is the same as an image 251a that was displayed on the display apparatus 200 in Fig. 3A, is displayed. In this way, even when asynchronous mode is set, there can be cases where the same image is displayed in the image 251a and the virtual image 153a.

Here, as one example, if a user operation such as pressing, dragging, or flicking has been carried out on a GUI component of the virtual image 153a, the virtual image 153a changes to a virtual image 153b such as that shown in (b) in accordance with the user operation. Since asynchronous mode has been set, the change from the virtual image 153a to the virtual image 153b is not reflected in the image 251a displayed on the display apparatus 200.

### Processing Flow

In the processing flow shown in Fig. 4, first, the object recognition unit 120 of the terminal apparatus 100 recognizes objects included in a picked-up image (step S101). Next, the switching control unit 140 determines whether the display screen 250 appears in the picked-up image based on the result of object recognition (step S103).

Here, if it is determined that the display screen 250 appears in the picked-up image, the switching control unit 140 sets synchronous mode (step S105). The switching control unit 140 may set synchronous mode if the image 251 appears in a specified region, for example at or near the center, of the picked-up image. Here, the display control unit 130 may have one or both of the display unit 150 and the display screen 250 display a notification showing that synchronous mode has been set (step S107).

In a state where synchronous mode has been set, the switching control unit 140 determines whether a specified user operation has been acquired by the operation unit 170 or the like (step S109). In the present embodiment, the specified user operation is moving the terminal apparatus 100 in a state where a long press is being made on the image 151. Note that the specified user operation is not limited to this example and may be any other user operation, such as a simple long press or tap, dragging the virtual image 153, or pressing a GUI button displayed on the image 151 or a hardware button of the terminal apparatus 100.

In step S109, when it is determined that a specified user operation has been acquired, the switching control unit 140 switches from synchronous mode to asynchronous mode (step Sill). Here, the display control unit 130 may have one or both of the display unit 150 and the display screen 250 display a notification of asynchronous mode (step S113).

According to the first embodiment of the present disclosure described above, synchronous mode and asynchronous mode for the image 251 and the virtual image 153 are switched by a distinct operation made by the user. Accordingly, as one example, switching between synchronous mode and asynchronous mode is performed as desired by the user, which improves operability when operating an image (the virtual image 153) on another apparatus displayed within an image (the image 151).

### 2. Second Embodiment

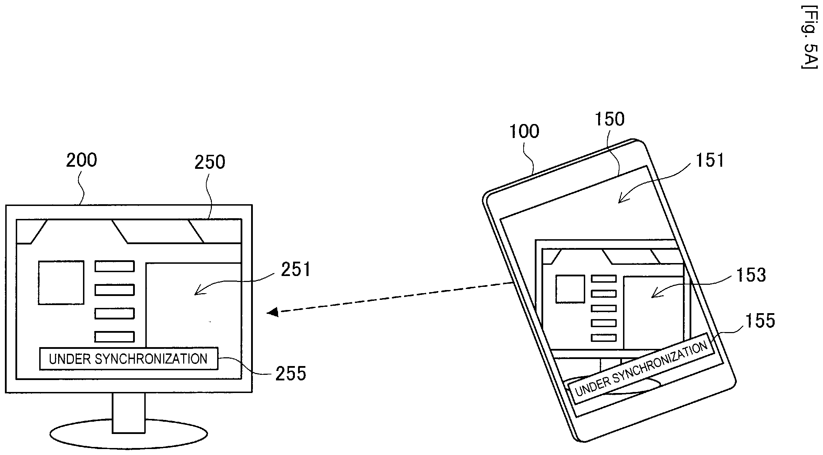

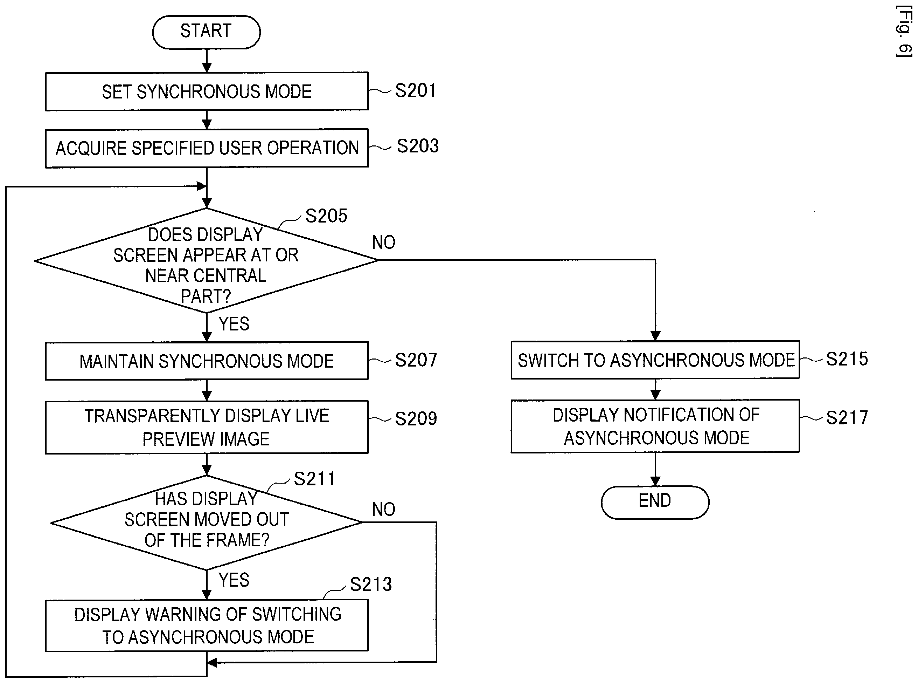

Next, an example of a switching process between synchronous mode and asynchronous mode according to a second embodiment of the present disclosure will be described with reference to Figs. 5A to 5C and Fig. 6. Figs. 5A to 5C are diagrams useful in explaining an example of a switching process according to the present embodiment. Fig. 6 is a flowchart showing the processing for the example in Figs. 5A to 5C.

In the following example, the switching control unit 140 of the terminal apparatus 100 switches between synchronous mode and asynchronous mode in accordance with the region of the display screen 250 in the picked-up image.

Fig. 5A shows a state where synchronous mode, where the present image 251 is synchronized with the virtual image 153, is set. As shown in the image 151, the display screen 250 displaying the image 251 appears large at or near the center of the picked-up image. In this case, the switching control unit 140 sets synchronous mode. For this reason, if the virtual image 153 changes according to a user operation of the terminal apparatus 100, such changes are also reflected in the image 251.

If synchronous mode is set as shown in Fig. 5A, the display control unit 130 may have the display unit 150 of the terminal apparatus 100 display a message 155 showing that synchronous mode has been set. In the same way, the display control unit 130 may also have the display screen 250 of the display apparatus 200 display a message 255 showing that synchronous mode is set.

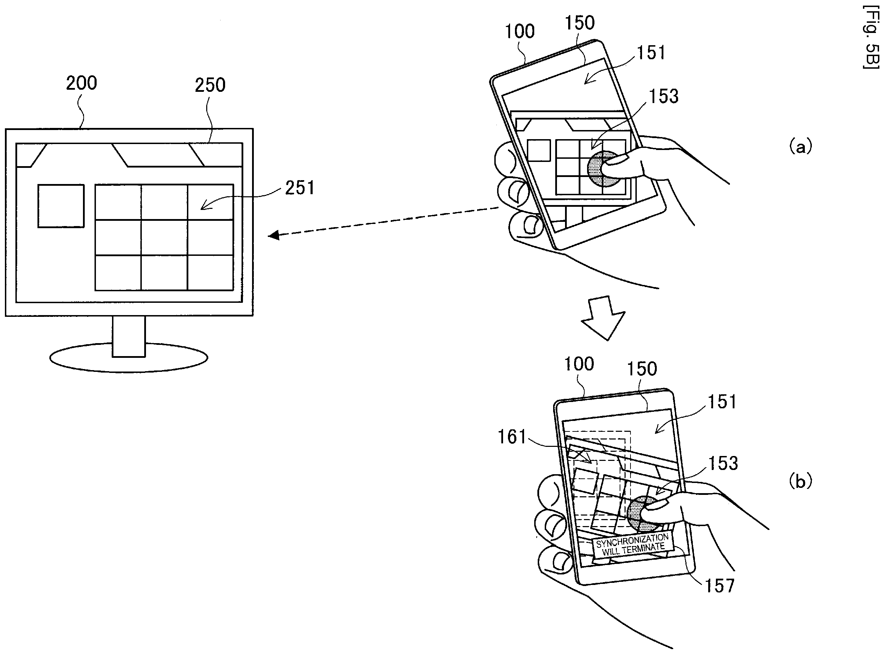

Fig. 5B shows a state where preparations are made for a switch from synchronous mode to asynchronous mode. As shown in (a), the user makes a long press on the display unit 150 (it is assumed here that the terminal apparatus 100 includes a touch panel as the operation unit 170).

In addition, as shown in (b), the user moves the terminal apparatus 100 while continuing the long press. Due to the movement of the terminal apparatus 100, the image 251 moves away from the center of the picked-up images. In this type of situation, the switching control unit 140 prepares for a switch from synchronous mode to asynchronous mode. Meanwhile, the display control unit 130 converts the image 151 at time (b) to a snapshot. For this reason, at a following time (c) (not shown), regardless of the change in the picked-up images due to the movement of the terminal apparatus 100, the image 151 will be in the same state as at time (b).

As described later, in the present embodiment, by subsequently moving the display screen 250 out of the frame of the picked-up images, there is a switch from synchronous mode to asynchronous mode. That is, the switch to asynchronous mode depends on the position of the display screen 250 in the picked-up images. For this reason, as shown in the drawings, the display control unit 130 may display a live preview image (a real-time picked-up image) 161 including the display screen 250 on the display unit 150 so as to be transparently overlaid on the image 151.

In this way, according to the present embodiment, the display control unit 130 displays the region of the display screen 250 included in the picked-up images on the display unit 150 together with the virtual image 153 which is fixed at a position at a certain time (i.e., is a snapshot). By doing so, while displaying the virtual image 153 as a snapshot at a position on the display unit 150 that is easy for the user to operate, it is possible to enable the user to recognize the present position of the display screen 250, which makes an operation of switching from synchronous mode to asynchronous mode easier and more intuitive.

The display control unit 130 may have the display unit 150 of the terminal apparatus 100 display a message 157 warning that synchronous mode will be terminated. Also, although not illustrated, in the same way the display control unit 130 may also have the display screen 250 of the display apparatus 200 on display a warning that synchronous mode will be terminated.

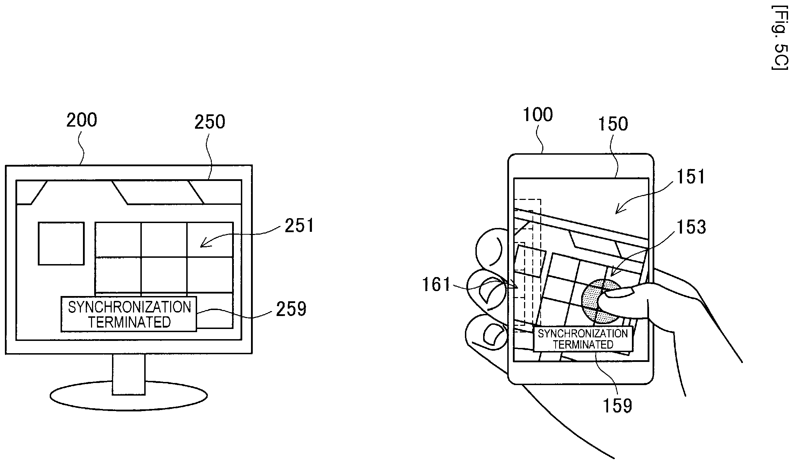

Fig. 5C shows a state where the switching from synchronous mode to asynchronous mode has been completed. As shown in the live preview image 161, at this time the image 251 has been moved away from the range of the picked-up image, leaving only an end part of the image 251. In this case, the switching control unit 140 switches from synchronous mode to asynchronous mode. That is, the switching control unit 140 switches from synchronous mode to asynchronous mode if the region of the display screen 250 is not included in a specified region of a picked-up image. In the present embodiment, the specified region of the picked-up images is at or near the center of the picked-up images.

At this time, the display control unit 130 may have the display unit 150 of the terminal apparatus 100 display a message showing that there has been a switch from synchronous mode to asynchronous mode. In the same way, the display control unit 130 may also have the display screen 250 of the display apparatus 200 display a message 259 showing that there has been a switch from synchronous mode to asynchronous mode.

If the switching control unit 140 has completed the switching from synchronous mode to asynchronous mode, the display control unit 130 may end the displaying of the live preview image 161 that is transparently overlaid on the image 151.

### Processing Flow

In the processing flow shown in Fig. 6, first the switching control unit 140 of the terminal apparatus 100 sets synchronous mode (step S201). After this, a specified user operation is acquired by the operation unit 170 or the like (step S203). Note that the processing thus far is the same as the processing in steps S101 to S109 in Fig. 4, for example.

When the specified operation has been acquired in step S203, the switching control unit 140 determines whether the display screen 250 appears at or near the center of a picked-up image (step S205). As examples, this determination may determine whether the entire display screen 250 is included in a picked-up image or may determine whether at least a specified proportion of the display screen 250 is included in the picked-up image. In addition, the switching control unit 140 may determine whether the display screen 250 included in the picked-up image is a specified size or larger.

If it has been determined in step S205 that the display screen 250 appears at or near the center of the picked-up image, the switching control unit 140 has synchronous mode maintained (step S207). Here, the display control unit 130 may display the live preview image 161 transparently overlaid on the image 151 (step S209).

Next, the switching control unit 140 determines whether the display screen 250 is about to move out of the frame from the picked-up image (step S211). Here, the expression "the display screen 250 is about to move out of the frame from the picked-up image" refers to a state where the display screen 250 is moving away from the state where "the display screen 250 appears at or near the center of a picked-up image" mentioned in step S205 described above. Accordingly, as examples, the determination in step S211 may determine whether the display screen 250 has approached the edge of the picked-up image or whether the proportion of the part of the display screen 250 included in the picked-up image has fallen to close to a specified proportion. The determination described above may also determine whether the display screen 250 has become smaller in the picked-up image.

If it has been determined in step S211 that the display screen 250 has moved out of the frame of the picked-up images, the display control unit 130 may have one or both of the display unit 150 and the display screen 250 display a warning about switching to asynchronous mode (step S213). As one example, the warning about switching to asynchronous mode may be a message such as the message 157 shown in the example in Fig. 5B.

After this, the switching control unit 140 repeats the determination (step S205) of whether the display screen 250 appears at or near the center of the picked-up image.

If it has been determined in step S205, that the image 251 does not appear at or near the center of the picked-up image, the switching control unit 140 switches from synchronous mode to asynchronous mode (step S215). Here, the display control unit 130 may have one or both of the display unit 150 and the display screen 250 display notification that switching to asynchronous mode has been carried out (step S217). As one example, such notification may be a message such as the message 159 and the message 259 shown in the example in Fig. 5C.

According to the second embodiment of the present disclosure described above, switching between synchronous mode and asynchronous mode is carried out automatically according to how the display screen 250 appears in the picked-up images. Accordingly, as one example, it is possible for the user to intuitively recognize the timing of switches between synchronous mode and asynchronous mode, which improves the operability when operating an image (the virtual image 153) on another apparatus displayed within an image (the image 151).

Note that although the switching control unit 140 switches from synchronous mode to asynchronous mode if the region of the display screen 250 is not included in a specified region of a picked-up image in the embodiment described above, in the same way it is also possible to realize an embodiment where the switching control unit 140 switches from asynchronous mode to synchronous mode if the region of the display screen 250 is included in a specified region of a picked-up image.

### 3. Third Embodiment

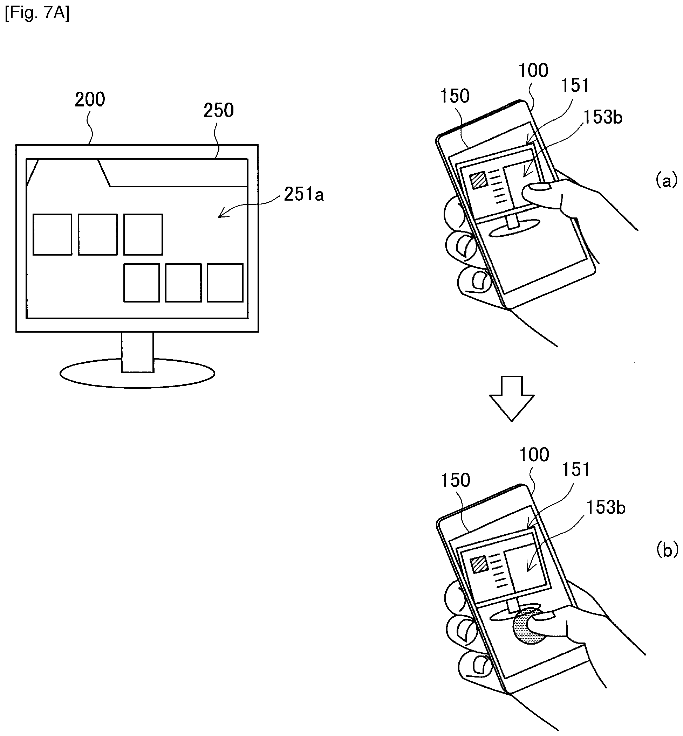

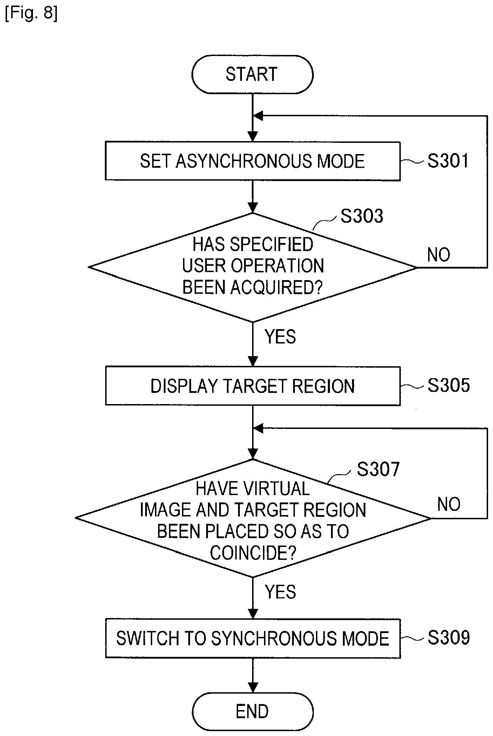

Next, an example of a switching process between synchronous mode and asynchronous mode according to a third embodiment of the present disclosure will be described with reference to Figs. 7A to 7C and Fig. 8. Figs. 7A to 7C are diagrams useful in explaining an example of a switching process according to the present embodiment. Fig. 8 is a flowchart showing the processing for the example in Figs. 7A to 7C.

In the example below, the switching control unit 140 of the terminal apparatus 100 switches between synchronous mode and asynchronous mode in accordance with a region of the display screen 250 included in a picked-up image.

Fig. 7A shows stages from a state where asynchronous mode is set until a specified user operation is acquired. At (a), since asynchronous mode, where the display of the present image 251 is not synchronized with the display of the virtual image 153, is set, an image 251a displayed on the display apparatus 200 and a virtual image 153b in the image 151 displayed on the terminal apparatus 100 have different contents. The image 151 is also a snapshot in the same way as in the example in Fig. 5A. This means that the virtual image 153 is displayed fixed at the position when checking out occurred, for example, and such position differs to the positions of the display screen 250 and the image 251 in the picked-up images.

In this state, as shown in (b), the user makes a long press on the display unit 150 (it is assumed here that the terminal apparatus 100 includes a touch panel as the operation unit 170).

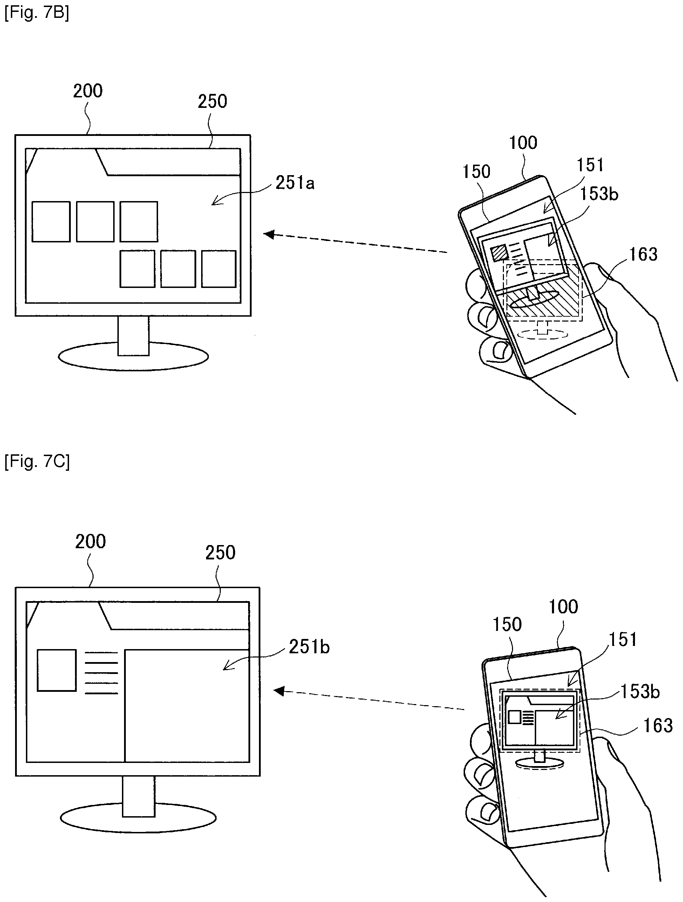

Fig. 7B shows a state after a long press operation by the user. When a long press operation has been carried out, the display control unit 130 displays a region corresponding to the display screen 250 included in the real-time picked-up images (live preview images) transparently overlaid on the image 151 as a target region 163. As examples, the target region 163 may be displayed as an icon as shown in Fig. 7B or may be shown by transparently overlaying the real-time picked-up image (live preview image) itself.

In this way, in the present embodiment the display control unit 130 displays the virtual image 153 at a position that is fixed at a certain time (i.e., as a snapshot) and also displays the region (target region 163) of the display screen 250 included in the picked-up image on the display unit 150. By doing so, while displaying the virtual image 153 as a snapshot at a position on the display unit 150 that is easy for the user to operate, it is possible to enable the user to recognize the present position of the display screen 250, which makes an operation of switching from asynchronous mode to synchronous mode easier and more intuitive.

Fig. 7C shows a state where the user has moved the terminal apparatus 100, resulting in the virtual image 153b coinciding with the target region 163. In the present embodiment, this results in a switch from asynchronous mode to synchronous mode. That is, the switching control unit 140 switches from asynchronous mode to synchronous mode if the region (the target region 163) of the display screen 250 in the picked-up image and the region of the virtual image 153 satisfy a specified relationship. In the present embodiment, the specified relationship between the regions is a state where at least a specified proportion of the regions overlap.

More specifically, in a state where the target region 163 is displayed, the switching control unit 140 detects the size of the region whether the virtual image 153b and the target region 163 overlap in the image 151. If at least a specified proportion of the virtual image 153b and the target region 163 overlap, the switching control unit 140 switches from asynchronous mode to synchronous mode. In the illustrated example, at such time the display control unit 130 executes, via the communication unit 160, a checking-in process that changes the display of the display screen 250 from the image 251a to the image 251b that is the same as the virtual image 153b.

### Processing Flow

In the processing flow shown in Fig. 8, first the switching control unit 140 sets asynchronous mode (step S301). Note that the processing up to the setting of asynchronous mode in step S201 may be processing such as that described above in the first or second embodiments, for example.

When asynchronous mode has been set, the switching control unit 140 determines whether a specified user operation has been acquired (step S303). Here, in the example in Fig. 7A, the specified user operation is a long press of the display unit 150. Note that the specified user operation may be any other user operation in the same way as in the first embodiment described above.

If it is determined in step S303 that a specified user operation has been acquired, the display control unit 130 has the target region 163 displayed on the display unit 150 (step S305). Here, the display control unit 130 may display a warning about switching to synchronous mode on one or both of the display unit 150 and the display screen 250.

In the state where the target region 163 is displayed, the switching control unit 140 determines whether the virtual image 153 displayed in the image 151 has been placed so as to coincide with the target region 163 (step S307). As described above, this determination may be carried out by determining whether at least a specified proportion of the virtual image 153b and the target region 163 overlap. That is, the virtual image 153 and the target region 163 do not need to be placed so as to entirely coincide.

If it has been determined in step S307 that the virtual image 153 and the target region 163 have been placed so as to coincide, the switching control unit 140 switches from asynchronous mode to synchronous mode (step S309). Here, the display control unit 130 may display a notification of synchronous mode on one or both of the display unit 150 and the display screen 250.

According to the third embodiment of the present disclosure described above, switching is carried out between synchronous mode and asynchronous mode for the image 251 and the virtual image 153 according to a distinct user operation and the procedure for switching the mode is intuitively shown to the user. Accordingly, the operability when operating an image (the virtual image 153) on another apparatus shown within an image (the image 151) is improved.

Note that although the switching control unit 140 switches from asynchronous mode to synchronous mode in the embodiment described above when a region (the target region 163) of the display screen 250 in the picked-up images and the region of the virtual image 153 satisfy a specified relationship, it is possible in the same way to realize an embodiment where the switching control unit 140 switches from synchronous mode to asynchronous mode when a region (the target region 163) of the display screen 250 in the picked-up images and the region of the virtual image 153 do not satisfy a specified relationship.

### 4. Other Embodiments

Note that the embodiments of the present disclosure are not limited to those described above and can be subjected to various modifications as shown in the examples described below.

As one example, the setting of synchronous mode and asynchronous mode by the switching control unit 140 of the terminal apparatus 100 may be limited to setting on the display apparatus 200. For example, if it is inconvenient to have the image 251 of the display apparatus 200 changed by an operation at the terminal apparatus 100, the display apparatus 200 may be set so that checking out is essential when operating the virtual image 153 at the terminal apparatus 100. In such case, the switching control unit 140 may switch from synchronous mode to asynchronous mode when an operation has been acquired, i.e., with any user operation of the virtual image 153 as the "specified user operation".

As another example, if a plurality of terminal apparatuses 100 are present and the image 251 displayed on the display apparatus 200 has been checked out at a certain terminal apparatus 100a, to prevent conflict between check-ins, the display apparatus 200 may prohibit both operations of the virtual image 153 in synchronous mode by another terminal apparatus 100b and checking out of the image 251 at the other terminal apparatus 100b.

As another example, the terminal apparatus 100 may check in and check out with a plurality of display apparatuses 200. As one example, the terminal apparatus 100 may check out with an image 251c displayed on a first display apparatus 200c as a virtual image 153c and then check in for an image 251d displayed on a second display apparatus 200d. In such case, the image 251d on the second display apparatus 200d is changed to the same image as the image 251c on the first display apparatus 200c.

The modes set by the switching control unit 140 are not limited to the synchronous mode and the asynchronous mode described above. As one example, the switching control unit 140 may set a neutral mode as an initial setting. In neutral mode, the displaying (indication) of the virtual image 153 included in the image 151 of the terminal apparatus 100 changes in accordance with the display of the present image 251. In this case, the switching control unit 140 may select synchronous mode or asynchronous mode when a user operation of the virtual image 153 has been acquired.

As described above in the embodiments, various triggers may be used to have the switching control unit 140 switch between synchronous mode and asynchronous mode. As examples, the triggers may be the position or size of the display screen 250 (or the image 251) included in the picked-up images, a user operation of a GUI component in the virtual image 153, a user operation of a hardware operation unit such as a button on the terminal apparatus 100, switching of applications displayed as the image 251, and the relationship between the relative postures (positions) of the terminal apparatus 100 and the display apparatus 200.

Out of the examples given above, the following are conceivable examples of when the switching control unit 140 switches between synchronous mode and asynchronous mode with the relationship between the relative postures (positions) of the terminal apparatus 100 and the display apparatus 200 as a trigger. As a first example, the switching control unit 140 may set synchronous mode when the image 251 is included in the picked-up image in a state that is close to the image 251 being viewed from in front and may set asynchronous mode when the image 251 is included in the picked-up image in a state where the image 251 is being viewed at an angle. As another example the switching control unit 140 may switch between synchronous mode and asynchronous mode in accordance with an angle of rotation (expressed as "upright", "sideways", "inclined" or the like) of the image 251 included in the picked-up image relative to a standard posture.

Also, although the position at which the virtual image 153 is to be disposed in order to switch modes from asynchronous mode to synchronous mode is displayed in the third embodiment described above, the same display may be used when switching from synchronous mode to asynchronous mode. As one example, in the first embodiment described above, the region of an edge part of the image 151 where the virtual image 153 is placed to cause a switch from synchronous mode to asynchronous mode may be displayed in a different state to other regions.

Note that although examples where the terminal apparatus 100 functions as an information processing apparatus have been described in the above embodiments, as another example the display apparatus 200 may function as an information processing apparatus. In such case, the switching between whether the image 251 is to be synchronized with the virtual image 153 is carried out at the display apparatus 200 side.

Also, a third apparatus that differs to the terminal apparatus 100 and the display apparatus 200 may function as an information processing apparatus. In such case, the third apparatus has a function for controlling the displays of both the terminal apparatus 100 and the display apparatus 200, for example. Such third apparatus may for example be a server apparatus connected via a network to the terminal apparatus 100 and the display apparatus 200. Note that such server apparatus does not need to be realized by a single apparatus. For example, by operating cooperatively via a network, the resources of a plurality of apparatuses may realize the functions of the server apparatus.

Also, the above embodiments of the present disclosure may be realized by a method executed by an information processing apparatus such as that described above, a program for causing an information processing apparatus to function, and a recording medium on which such program is recorded.

### 5. Supplement

### <Hardware Configuration>

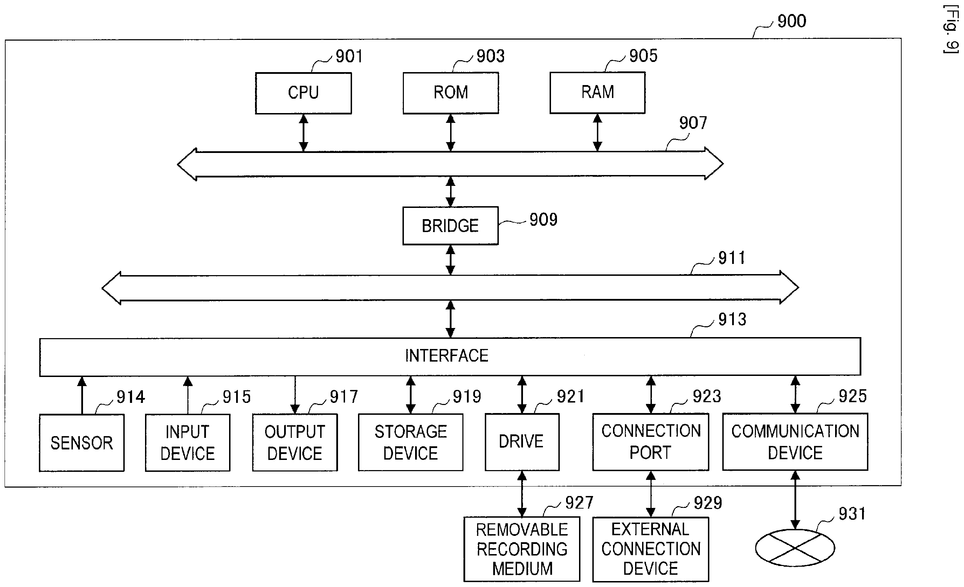

Finally, with reference to Fig. 9, a description will be made of a hardware configuration of the information processing apparatus 900 capable of realizing the information processing apparatus such as the terminal apparatus 100 according to the embodiments of the present disclosure. Fig. 9 is a block diagram illustrating a hardware configuration of the information processing apparatus.

The information processing device 900 includes a CPU (Central Processing Unit) 901, ROM (Read Only Memory) 903, and RAM (Random Access Memory) 905. Further, the information processing device 900 may include a host bus 907, a bridge 909, an external bus 911, an interface 913, an input device 915, an output device 917, a storage device 919, a drive 921, a connection port 923, and a communication device 925. The information processing device 900 may include a processing circuit such as DSP (Digital Signal Processor) in addition to or instead of the CPU 901.

The CPU 901 functions as an arithmetic processing unit and a control unit, and controls the entire operation within the information processing device 900 or a part thereof in accordance with various programs recorded on the ROM 903, the RAM 905, the storage 919, or the removable recording medium 927. The ROM 903 stores programs, operation parameters, and the like used by the CPU 901. The RAM 905 temporarily stores programs used in the execution of the CPU 901, parameters that change as appropriate during the execution, and the like. The CPU 901, the ROM 903, and the RAM 905 are mutually connected by a host bus 907 constructed from an internal bus such as a CPU bus. Further, the host bus 907 is connected to the external bus 911 such as a PCI (Peripheral Component Interconnect/Interface) via the bridge 909.

The input device 915 is a device used by a user such as, for example, a mouse, a keyboard, a touch panel, a button, a switch, or a lever. The input device 915 may be, for example, a remote control device that uses infrared rays or other radio waves, or an external connection device 929 such as a portable phone corresponding to the operation of the information processing device 900. The input device 915 includes an input control circuit that generates an input signal based on information input by a user and outputs the input signal to the CPU 901. The user can, by operating the input device 915, input various data to the information processing device 900 or instruct the information processing device 900 to perform a processing operation.

The output device 917 includes a device that can visually or audibly inform a user of the acquired information. The output device 917 can be, for example, a display device such as an LCD (liquid crystal display), a PDP (Plasma Display Panel,) an organic EL (Electro-Luminescence) display; an audio output device such as a speaker or headphones; or a printer device. The output device 917 outputs the result obtained through the processing of the information processing device 900 as text or video such as an image or as sound such as voice or audio.

The storage device 919 is a device for storing data, constructed as an example of a storage unit of the information processing device 900. The storage device 919 includes, for example, a magnetic storage device such as HDD (Hard Disk Drive), a semiconductor storage device, an optical storage device, or a magneto-optical storage device. This storage device 929 includes, for example, programs or various data executed by the CPU 901 or various data acquired from the outside.

The drive 921 is a reader/writer for a removable recording medium 927 such as a magnetic disk, an optical disc, a magneto-optical disk, or semiconductor memory, and is incorporated in or externally attached to the information processing device 900. The drive 921 reads information recorded on a removable recording medium 927 that is mounted, and outputs the information to the RAM 905. The drive 921 also writes information to the removable recording medium 927 that is mounted.

The connection port 923 is a port for directly connecting a device to the information processing device 900. The connection port 923 can be, for example, a USB (Universal Serial Bus) port, an IEEE 1394 port, or a SCSI (Small Computer System Interface) port. In addition, the connection port 923 may be an RS232C port, an optical audio terminal, or a HDMI (High-Definition Multimedia Interface) port. When the external connection device 929 is connected to the connection port 923, the information processing device 900 and the external connection device 929 can exchange various data.

The communication device 925 is, for example, a communication interface including a communication device or the like for connection to a communications network 931. The communication device 925 can be, for example, a wired or wireless LAN (Local Area Network) or a communication card for Bluetooth (registered trademark) or WUSB (Wireless USB). Alternatively, the communication device 925 may be a router for optical communication, a router for ADSL (Asymmetric Digital Subscriber Line), or a modem for various communication. The communication device 925 transmits or receives signals or the like via the Internet or to/from other communication devices, for example, using a predetermined protocol such as TCP/IP. In addition, the communications network 931 connected to the communication device 925 is a network connected by wire or wirelessly, and is, for example, the Internet, a home LAN, infrared communication, radio wave communication, or satellite communication.

The image pickup device 933 is, for example, an apparatus which captures a real world and generates a captured image by using image sensor such as CCD (Charge Coupled Device) or CMOS (Complementary Metal Oxide Semiconductor) and various components such as lens for picking up a subject image to the image sensor. The image device 933 may be configured to pick up still images or moving images.

The sensor 935 may be various types of sensors such as an acceleration sensor, a gyro sensor, a geomagnetic sensor, an optical sensor, and an acoustic sensor. The sensor 935 acquires information related to the state of an information processing apparatus 900 such as the shape of housing of the information processing apparatus 900 and information related to surrounding environment of the information processing apparatus 900 such as brightness or noise in surroundings of the information processing apparatus 900. Moreover, the sensor 935 may include a GPS (Global Positioning System) sensor which receives a GPS signal and measures latitude, longitude and altitude of the apparatus.

An example of the hardware configuration of the information processing apparatus 900 has been described. The respective components described above may be configured using general purpose elements, and may be configured by hardware specialized to the function of the respective components. Such configurations can be appropriately changed according to the technical level at the time of implementing the present embodiments.

Although preferred embodiments of the present disclosure are described in detail above with reference to the appended drawings, the disclosure is not limited thereto. It should be understood by those skilled in the art that various modifications, combinations, sub-combinations and alterations may occur depending on design requirements and other factors insofar as they are within the scope of the appended claims.

## Claims

1. An information processing apparatus (100) comprising:
an image receiving unit (110) configured to receive a picked-up image including a first image (251) displayed on a display monitor (200) and at least a region of a display screen (250) of the display monitor (200);
an object recognition unit (120) configured to recognize the display screen (250) included in the picked-up image and the first image (251) displayed on the display screen (250);
a display control unit (130) configured to display a second image (151) on a display unit (150), wherein the second image (151) comprises at least a portion of the first image (251);
a communication unit (160) configured to communicate information associated with an alteration to the display monitor (200); **characterized by**
a switching control unit (140) configured to switch between: a synchronous mode and an asynchronous mode, wherein:
in the synchronous mode, the first image (251) is synchronized with the second image (151) such that an alteration made to the second image (151) is included in the first image (251), and
in the asynchronous mode the first image (251) is not synchronized with the second image (151).

2. The information processing apparatus (100) of claim 1, wherein the alteration is made to the second image (151) in response to user input.

3. The information processing apparatus (100) of claim 1, wherein
display information is displayed on the display unit (150), wherein
the display information comprises at least one of:
information that indicates that the synchronous mode is set,
information that indicates a change between the synchronous mode and the asynchronous mode will occur, and
information that indicates a change between the synchronous mode and the asynchronous mode has occurred.

4. The information processing apparatus (100) of claim 1, wherein
the communication unit (160) is configured to communicate display information to the display monitor (200), wherein
the display information comprises at least one of:
information that indicates that the synchronous mode is set,
information that indicates a change between the synchronous mode and the asynchronous mode will occur, and
information that indicates a change between the synchronous mode and the asynchronous mode has occurred.

5. The information processing apparatus (100) of claim 1, wherein in the asynchronous mode, in the event that the second image (151) is altered, the first image (251) is not synchronized with the second image (151).

6. The information processing apparatus (100) of claim 1, wherein the switching control unit (140) is configured to:
select the synchronous mode in the event that a particular object appears in the second image (151), and/or
select the asynchronous mode in the event that a particular object does not appear in the second image (151).

7. The information processing apparatus (100) of claim 6, further comprising
an object recognition unit configured determine if the particular object appears in the second image (151), wherein
in response to the object recognition unit identifying the particular object in the second image (151), the switching control unit (140) selects the synchronous mode.

8. The information processing apparatus (100) of claim 7, wherein the particular object is at least a portion of the display monitor (200).

9. The information processing apparatus (100) of claim 1, wherein, in the event that the switching control unit (140) selects one of: the synchronous mode and the asynchronous mode, at least one of the display monitor (200) and the display unit (150) displays an indication of the selected mode.

10. The information processing apparatus (100) of claim 1, wherein the first image (251) is captured, in particular captured by an external device.

11. The information processing apparatus (100) of claim 1, wherein, in response to user input received on the display unit (150), the switching control unit (140) selects one of: the synchronous mode and the asynchronous mode.

12. The information processing apparatus (100) of claim 1, wherein
the switching control unit (140) selects one of: the synchronous mode and the asynchronous mode
in response to an elapsed predetermined period of time, and/or
in response to movement of the first image (251), and/or
in response to movement of the information processing apparatus, and/or
wherein the switching control unit (140) selects the synchronous mode in response to movement of the information processing apparatus causing the second image (151) to overlap at least a portion of the first image (251).

13. A method for processing an image, the method comprising:
receiving picked-up image including a first image (251) displayed on a display monitor (200) and at least a region of a display screen (250) of the display monitor (200);
recognizing the display screen (250) included in the picked-up image and the first image (251) displayed on the display screen (250);
displaying a second image (151) on a display unit (150), wherein the second image (151) comprises at least a portion of the first image (251);
communicating information associated with an alteration to the display monitor (200);
**characterized by**
switching between: a synchronous mode and an asynchronous mode, wherein:
in the synchronous mode, the first image (251) is synchronized with the second image (151) such that an alteration made to the second image (151) is included in the first image (251), and
in the asynchronous mode the first image (251) is not synchronized with the second image (151).

14. A program encoded on a non-transitory computer-readable medium that, when executed by a processor, performs the method according to claim 13.

## Patentansprüche

1. Informationsverarbeitungsvorrichtung (100), die Folgendes umfasst:
eine Bildempfangseinheit (110), die dazu ausgelegt ist, ein aufgenommenes Bild, das ein auf einem Anzeigemonitor (200) angezeigtes erstes Bild (251) enthält, und zumindest einen Bereich eines Anzeigebildschirms (250) des Anzeigemonitors (200) zu empfangen;
eine Objekterkennungseinheit (120), die dazu ausgelegt ist, den in dem aufgenommenen Bild enthaltenen Anzeigebildschirm (250) und das auf dem Anzeigebildschirm (250) angezeigte erste Bild (251) zu erkennen;
eine Anzeigesteuereinheit (130), die dazu ausgelegt ist, ein zweites Bild (151) auf einer Anzeigeeinheit (150) anzuzeigen,
wobei das zweite Bild (151) zumindest einen Teil des ersten Bilds (251) enthält;
eine Kommunikationseinheit (160), die dazu ausgelegt ist, mit einer Änderung verbundene Informationen zu dem Anzeigemonitor (200) zu übermitteln;
**gekennzeichnet durch**
eine Schaltsteuereinheit (140), die dazu ausgelegt ist, zwischen einem synchronen Modus und einem asynchronen Modus umzuschalten, wobei:
in dem synchronen Modus das erste Bild (251) mit dem zweiten Bild (151) synchronisiert wird, so dass eine an dem zweiten Bild (151) vorgenommene Änderung in dem ersten Bild (251) enthalten ist, und
in dem asynchronen Modus das erste Bild (251) nicht mit dem zweiten Bild (151) synchronisiert wird.

2. Informationsverarbeitungsvorrichtung (100) nach Anspruch 1,
wobei die Änderung in Reaktion auf eine Benutzereingabe an dem zweiten Bild (151) vorgenommen wird.

3. Informationsverarbeitungsvorrichtung (100) nach Anspruch 1,
wobei Anzeigeinformationen auf der Anzeigeeinheit (150) angezeigt werden,
wobei die Anzeigeinformationen zumindest ein Element von Folgenden umfassen:
Informationen, die angeben, dass der synchrone Modus aktiviert ist,
Informationen, die angeben, dass ein Wechsel zwischen dem synchronen Modus und dem asynchronen Modus auftreten wird, und
Informationen, die angeben, dass ein Wechsel zwischen dem synchronen Modus und dem asynchronen Modus aufgetreten ist.

4. Informationsverarbeitungsvorrichtung (100) nach Anspruch 1,
wobei die Kommunikationseinheit (160) dazu ausgelegt ist, Anzeigeinformationen zu dem Anzeigemonitor (200) zu übermitteln,
wobei die Anzeigeinformationen zumindest ein Element von Folgenden umfassen:
Informationen, die angeben, dass der synchrone Modus aktiviert ist,
Informationen, die angeben, dass ein Wechsel zwischen dem synchronen Modus und dem asynchronen Modus auftreten wird, und
Informationen, die angeben, dass ein Wechsel zwischen dem synchronen Modus und dem asynchronen Modus aufgetreten ist.

5. Informationsverarbeitungsvorrichtung (100) nach Anspruch 1,
wobei, im asynchronen Modus, in dem Fall, dass das zweite Bild (151) verändert wird, das erste Bild (251) nicht mit dem zweiten Bild (151) synchronisiert wird.

6. Informationsverarbeitungsvorrichtung (100) nach Anspruch 1,
wobei die Schaltsteuereinheit (140) für Folgendes ausgelegt ist:
Auswählen des synchronen Modus in dem Fall, dass ein bestimmtes Objekt in dem zweiten Bild (151) erscheint, und/oder
Auswählen des asynchronen Modus in dem Fall, dass ein bestimmtes Objekt nicht in dem zweiten Bild (151) erscheint.

7. Informationsverarbeitungsvorrichtung (100) nach Anspruch 6, die ferner Folgendes umfasst:
eine Objekterkennungseinheit, die dazu ausgelegt ist zu bestimmen, ob das bestimmte Objekt in dem zweiten Bild (151) erscheint,
wobei, in Reaktion auf das Identifizieren des bestimmten Objekts in dem zweiten Bild (151) durch die Objekterkennungseinheit, die Schaltsteuereinheit (140) den synchronen Modus wählt.

8. Informationsverarbeitungsvorrichtung (100) nach Anspruch 7,
wobei das bestimmte Objekt zumindest einen Teil des Anzeigemonitors (200) darstellt.

9. Informationsverarbeitungsvorrichtung (100) nach Anspruch 1,
wobei, in dem Fall, dass die Schaltsteuereinheit (140) entweder den synchronen Modus oder den asynchronen Modus wählt, zumindest eine Einheit des Anzeigemonitors (200) und der Anzeigeeinheit (150) eine Angabe des ausgewählten Modus anzeigt.

10. Informationsverarbeitungsvorrichtung (100) nach Anspruch 1,
wobei das erste Bild (251) aufgenommen wird, insbesondere von einem externen Gerät.

11. Informationsverarbeitungsvorrichtung (100) nach Anspruch 1,
wobei, in Reaktion auf eine an der Anzeigeeinheit (150) empfangene Benutzereingabe, die Schaltsteuereinheit (140) entweder den synchronen Modus oder den asynchronen Modus wählt.

12. Informationsverarbeitungsvorrichtung (100) nach Anspruch 1,
wobei die Schaltsteuereinheit (140) entweder den synchronen Modus oder den asynchronen Modus wählt
in Reaktion auf den Ablauf eines vorbestimmten Zeitraums, und/oder
in Reaktion auf eine Bewegung des ersten Bilds (251), und/oder
in Reaktion auf eine Bewegung der Informationsverarbeitungsvorrichtung, und/oder
wobei die Schaltsteuereinheit (140) den synchronen Modus in Reaktion auf eine Bewegung der Informationsverarbeitungsvorrichtung wählt, um zu bewirken, dass das zweite Bild (151) zumindest einen Teil des ersten Bilds (251) überlappt.

13. Verfahren zum Verarbeiten eines Bilds, wobei das Verfahren Folgendes umfasst:
Empfangen eines aufgenommenen Bilds, das ein auf einem Anzeigemonitor (200) angezeigtes erstes Bild (251) enthält, und zumindest eines Bereichs eines Anzeigebildschirms (250) des Anzeigemonitors (200);
Erkennen des in dem aufgenommenen Bild enthaltenen Anzeigebildschirms (250) und des auf dem Anzeigebildschirm (250) angezeigten ersten Bilds (251);
Anzeigen eines zweiten Bilds (151) auf einer Anzeigeeinheit (150),
wobei das zweite Bild (151) zumindest einen Teil des ersten Bilds (251) enthält;
Übermitteln von mit einer Änderung verbundenen Informationen zu dem Anzeigemonitor (200);
**gekennzeichnet durch**
Umschalten zwischen einem synchronen Modus und einem asynchronen Modus,
wobei, in dem synchronen Modus, das erste Bild (251) mit dem zweiten Bild (151) synchronisiert wird, so dass eine an dem zweiten Bild (151) vorgenommene Änderung in dem ersten Bild (251) enthalten ist, und
in dem asynchronen Modus das erste Bild (251) nicht mit dem zweiten Bild (151) synchronisiert wird.

14. Auf einem nicht flüchtigen computerlesbaren Medium codiertes Programm, das, wenn es durch einen Prozessor ausgeführt wird, das Verfahren gemäß Anspruch 13 durchführt.

## Revendications

1. Appareil de traitement d'informations (100) comprenant :
une unité de réception d'image (110) configurée pour recevoir une image saisie comportant une première image (251) affichée sur un unité de visualisation (200) et au moins une région d'un écran d'affichage (250) de l'unité de visualisation (200) ;
une unité de reconnaissance d'objet (120) configurée pour reconnaître l'écran d'affichage (250) inclus dans l'image saisie et la première image (251) affichée sur l'écran d'affichage (250) ;
une unité de commande d'affichage (130) configurée pour afficher une seconde image (151) sur une unité d'affichage (150), la seconde image (151) comprenant au moins une partie de la première image (251) ;
une unité de communication (160) configurée pour communiquer des informations associées à une altération de l'unité de visualisation (200) ; **caractérisé par**
une unité de commande de commutation (140) configurée pour commuter entre : un mode synchrone et un mode asynchrone, dans lequel :
dans le mode synchrone, la première image (251) est synchronisée avec la seconde image (151) de telle sorte qu'une altération apportée à la seconde image (151) soit incluse dans la première image (251), et
dans le mode asynchrone la première image (251) n'est pas synchronisée avec la seconde image (151).

2. Appareil de traitement d'informations (100) selon la revendication 1, dans lequel l'altération est apportée à la seconde image (151) en réponse à une entrée d'utilisateur.

3. Appareil de traitement d'informations (100) selon la revendication 1, dans lequel des informations d'affichage sont affichées sur l'unité d'affichage (150), dans lequel
les informations d'affichage comprennent au moins :
des informations qui indiquent que le mode synchrone est établi, ou
des informations qui indiquent qu'un changement entre le mode synchrone et le mode asynchrone est imminent, ou
des informations qui indiquent qu'un changement entre le mode synchrone et le mode asynchrone est survenu.

4. Appareil de traitement d'informations (100) selon la revendication 1, dans lequel
l'unité de communication (160) est configurée pour communiquer des informations d'affichage à l'unité de visualisation (200), dans lequel
les informations d'affichage comprennent au moins :
des informations qui indiquent que le mode synchrone est établi, ou
des informations qui indiquent qu'un changement entre le mode synchrone et le mode asynchrone est imminent, ou
des informations qui indiquent qu'un changement entre le mode synchrone et le mode asynchrone est survenu.

5. Appareil de traitement d'informations (100) selon la revendication 1, dans lequel dans le mode asynchrone, en cas d'altération de la seconde image (151), la première image (251) n'est pas synchronisée avec la seconde image (151).

6. Appareil de traitement d'informations (100) selon la revendication 1, dans lequel l'unité de commande de commutation (140) est configurée pour :
sélectionner le mode synchrone en cas d'apparition d'un objet particulier dans la seconde image (151), et/ou
sélectionner le mode asynchrone en cas de non-apparition d'un objet particulier dans la seconde image (151) .

7. Appareil de traitement d'informations (100) selon la revendication 6, comprenant en outre
une unité de reconnaissance d'objet configurée pour déterminer que l'objet particulier apparaît ou non dans la seconde image (151), dans lequel
quand l'unité de reconnaissance d'objet identifie l'objet particulier dans la seconde image (151), l'unité de commande de commutation (140) sélectionne le mode synchrone.

8. Appareil de traitement d'informations (100) selon la revendication 7, dans lequel l'objet particulier est au moins une partie de l'unité de visualisation (200).

9. Appareil de traitement d'informations (100) selon la revendication 1, dans lequel, quand l'unité de commande de commutation (140) sélectionne un : du mode synchrone et du mode asynchrone, au moins une de l'unité de visualisation (200) et de l'unité d'affichage (150) affiche une indication du mode sélectionné .

10. Appareil de traitement d'informations (100) selon la revendication 1, dans lequel la première image (251) est capturée, en particulier capturée par un dispositif externe.

11. Appareil de traitement d'informations (100) selon la revendication 1, dans lequel, en réponse à une entrée d'utilisateur reçue sur l'unité d'affichage (150), l'unité de commande de commutation (140) sélectionne un : du mode synchrone et du mode asynchrone.

12. Appareil de traitement d'informations (100) selon la revendication 1, dans lequel
l'unité de commande de commutation (140) sélectionne un : du mode synchrone et du mode asynchrone
en réponse à une période de temps prédéterminée écoulée, et/ou
en réponse à un mouvement de la première image (251), et/ou
en réponse à un mouvement de l'appareil de traitement d'informations, et/ou
dans lequel l'unité de commande de commutation (140) sélectionne le mode synchrone en réponse à un mouvement de l'appareil de traitement d'informations provoquant un chevauchement par la seconde image (151) d'au moins une partie de la première image (251).

13. Procédé de traitement d'une image , le procédé comprenant :
la réception d'une image saisie comportant une première image (251) affichée sur une unité de visualisation (200) et au moins une région d'un écran d'affichage (250) de l'unité de visualisation (200) ;
la reconnaissance de l'écran d'affichage (250) inclus dans l'image saisie et la première image (251) affichée sur l'écran d'affichage (250) ;
l'affichage d'une seconde image (151) sur une unité d'affichage (150), la seconde image (151) comprenant au moins une partie de la première image (251) ;
la communication d'informations associées à une altération de l'unité de visualisation (200) ;
**caractérisé par**
la commutation entre: un mode synchrone et un mode asynchrone, dans lequel :
dans le mode synchrone, la première image (251) est synchronisée avec la seconde image (151) de telle sorte qu'une altération apportée à la seconde image (151) soit incluse dans la première image (251), et
dans le mode asynchrone la première image (25l) n'est pas synchronisée avec la seconde image (151).

14. Programme codé sur un support non transitoire lisible par ordinateur qui, à son exécution par un processeur, met en œuvre le procédé selon la revendication 13.
